# EUROPÄISCHE PATENTSCHRIFT

(11) **EP 1 582 802 B1**
(45) Veröffentlichungstag und Bekanntmachung des Hinweises auf die Patenterteilung: **05.11.2008**
(21) Anmeldenummer: 04101382.2
(22) Anmeldetag: 02.04.2004
(51) Int. Cl.: F16M 13/02

(54) **Ständer mit Halterungsvorrichtung für einen Flachbildschirm**
Stand with fixture for a flat screen
Support avec dispositif de fixation pour écran plat

(43) Veröffentlichungstag der Anmeldung: 05.10.2005
(73) Patentinhaber: Maurer, Ernst, 3615 Heimenschwand (CH)
(72) Erfinder: Maurer, Ernst, 3615 Heimenschwand (CH)
(74) Vertreter: BOVARD AG

(56) Entgegenhaltungen:
- EP-A- 0 939 548
- WO-A-03/092341
- DE-A- 10 205 869
- US-A1- 2003 137 612
- US-B1- 6 343 006

## Beschreibung

Die vorliegende Erfindung bezieht sich auf einen Ständer mit Halterungsvorrichtung für einen Flachbildschirm, welche Halterungsvorrichtung einen ersten Halteteil, der am Flachbildschirm befestigbar ist, und einen zweiten Halteteil, der am Ständer befestigbar ist, umfasst, wobei der erste Halteteil und der zweite Halteteil über Verbindungsmittel miteinander verbindbar sind, welche Verbindungsmittel so ausgestaltet sind, dass der erste Halteteil bezüglich des zweiten Halteteils einstellbar und ausrichtbar ist, und der erste Halteteil und der zweite Halteteil jeweils aus einer Platte gebildet sind, und an einer der Platten mindestens drei bolzenartige Elemente im wesentlichen senkrecht dazu angebracht sind und in achsialer Richtung bezüglich dieser Platte einstellbar sind, auf welchen bolzenartigen Elementen die andere Platte abstützbar ist, und an der Platte des zweiten Halteteils eine im wesentlichen senkrecht dazu stehende Abstützfläche angebracht ist, auf welcher zwei im wesentlichen parallel zueinander und zur Platte des ersten Halteteils ausgerichtete, an Aufnahmeelementen der Platte des ersten Halteteils angebrachte weitere bolzenartige Elemente abstützbar sind, welche in achsialer Richtung einstellbar sind.

Es ist bekannt, dass Steuerpulte oder Kommandopulte mit mehreren Flachbildschirmen ausgestattet werden, auf welchen die gewünschten und erforderlichen Angaben und Informationen ersichtlich sind. Hierbei sind diese Flachbildschirme sowohl über- als auch nebeneinander angeordnet. Diese Flachbildschirme weisen einen sehr schmalen Rand auf, der gegenseitige Abstand voneinander sollte praktisch null sein.

Diese Flachbildschirme sind mittels Halterungsvorrichtungen an Ständern angebracht. Die Halterungsvorrichtungen müssen somit einstellbar sein, damit die Flachbildschirme aufeinander ausgerichtet werden können, da auch geringfügig Versetzungen der Flachbildschirme gegeneinander von blossem Auge sehr gut erkennbar sind und als störend empfunden werden.

Derartige Halterungsvorrichtungen sind bekannt. So zeigt beispielsweise die US-A 2003/0137612 eine Halterungseinrichtung, bei welcher die Fixierung der einen Platte bezüglich der anderen Platte relativ aufwändig ist.

Ferner zeigt die US-B-6 343 006 eine Halterungseinrichtung, bei welchen die Ausrichtbarkeit über ein Kugelgelenk erfolgt, das zwischen erstem Halteteil, der am Flachbildschirm befestigt ist und zweitem Halteteil, der am Ständer angeordnet ist, eingesetzt ist. Dieses Kugelgelenk ermöglicht eine Beweglichkeit zum Einstellen der Flachbildschirme in allen Richtungen, ein genaues Einjustieren ist aber schwierig.

Die Aufgabe der vorliegenden Erfindung besteht nun darin, einen Ständer mit Halterungsvorrichtung für einen Flachbildschirm zu gestalten, durch welche ein genaues Einjustieren des Flachbildschirms in alle Richtungen ermöglich, der einfach in der Bedienung ist, der günstig hergestellt werden kann und der einfach ausgestaltet ist.

Erfindungsgemäss erfolgt die Lösung dieser Aufgabe dadurch, dass die Verbindungsmittel aus einem mit Gewinde versehenem Schaft, welcher an der Platte des ersten Halteteils befestigt ist und durch eine Öffnung in der Platte des zweiten Halteteils hindurch ragt, und einer auf den Schaft aufschraubbaren Gewindemutter bestehen, mit welcher der erste Halteteil gegen den zweiten Halteteil spannbar ist.

Durch das achsiale Verstellen der bolzenartigen Elemente kann die Distanz zwischen der einen Platte und der anderen Platte eingestellt werden, die erforderlichen Neigungen zwischen diesen beiden Platten lässt sich ebenfalls durch die bolzenartigen Elemente einstellen. Durch die weiteren bolzenartigen Elemente, die an Aufnahmeelementen der Platte des ersten Halteteils angebracht sind, und die sich auf einer Abstützfläche abstützen, die an der Platte des zweiten Halteteils angebracht sind, lässt sich die Höhe der einen Platte zur anderen Platte einjustieren. Zudem kann auch eine eventuelle Schrägstellung eines Flachbildschirms damit ausgeglichen bzw. eingestellt werden.

Die Verbindungsmittel bestehen aus einem mit Gewinde versehenem Schaft, welcher an der Platte des ersten Halteteils befestigt ist und durch eine Öffnung in der Platte des zweiten Halteteils hindurchragt, und einer auf den Schaft aufschraubbaren Gewindemutter, mit welcher der erste Halteteil gegen den zweiten Halteteil spannbar ist. Dadurch kann erreicht werden, dass nach dem Einstellen des ersten Halteteils bezüglich des zweiten Halteteils über die bolzenartigen Elemente durch Festziehen dieser einen Gewindemutter die beiden Halteteile in der eingestellten Position fixiert sind.

Indem die Öffnung der Platte des zweiten Halteteils schlitzförmig ausgebildet ist und eine Breite hat, die mindestens dem 1,5-fachen des Durchmesser des Schaftes entspricht, können die erforderlichen Verstellungen des ersten Halteteils bezüglich des zweiten Halteteils in einem bestimmten Ausmass problemlos ausgeführt werden.

In vorteilhafter Weise bestehen die bolzenartigen Elemente und die weiteren bolzenartigen Elemente, welche in jeweilige Gewindelöcher einschraubbar sind, die an der Platte des zweiten Halteteils bzw. an den Aufnahmeelementen der Platte des ersten Halteteils angebracht sind, aus Schrauben, wodurch sich ein sehr einfaches Einstellen ergibt, und wodurch auch die Herstellung in günstiger Weise erfolgen kann.

Eine weitere vorteilhafte Ausgestaltung der Erfindung besteht darin, dass der erste Halteteil und der zweite Halteteil aus jeweils einem metallischen Blechteil gebildet sind, und dass die Aufnahmeelemente des ersten Halteteils durch eine Abwinkelung des entsprechenden Blechteils und die Abstützfläche des zweiten Halteteils durch eine Abwinkelung des entsprechenden Blechteils gebildet sind. Dies ergibt eine besonders einfache Herstellung der beiden Halteteile.

Eine weitere vorteilhafte Ausgestaltung der Erfindung besteht darin, dass der Ständer aus zwei gleichen Platten gebildet ist, welche parallel zueinander und voneinander beabstandet miteinander fest verbunden sind und eine Grundplatte aufweisen, dass der eine längsseitige Rand der Platten bezüglich der Grundplatte geneigt ist, während der andere längsseitige Rand der Platten bezüglich der Grundplatte senkrecht verläuft, und dass entlang der längsseitigen Ränder der Platten Lochreihen angebracht sind.

Durch diese Ausgestaltung der Ständer können die Haltevorrichtungen in einfacher Weise und in der Höhe wählbar auf beiden Seiten des Ständers angebracht werden, auf der einen Seite sind die durch die Halterungsvorrichtungen getragenen Flachbildschirme bezüglich der Bedienerperson geneigt, während auf der anderen Seite die Flachbildschirme im Bogen um die Bedienerperson angeordnet werden können.

Eine sehr einfache und in der Herstellung günstige Befestigungsart der Halterungsvorrichtung am jeweiligen Ständer ergibt sich dadurch, dass der zweite Halteteil mit zwei jeweils seitlich verlaufenden Stegen ausgestattet ist, in welchen Ausnehmungen angebracht sind, so dass der zweite Halteteil mit dem Ständer über die Löcher der Lochreihen in wählbarer Höhe verschraubbar ist.

In vorteilhafter Weise sind die oberen Ausnehmungen in den Stegen des zweiten Halteteils als längsverlaufende Schlitze ausgebildet und die unteren Ausnehmungen in den Stegen des zweiten Halteteils als querverlaufende Schlitze ausgebildet. Dadurch können bereits grobe Voreinstellungen vorgenommen werden, die Löcher der Lochreihen sind immer passend auf diese Ausnehmungen.

In vorteilhafter Weise ist an der den am Ständer angebrachten Halterungsvorrichtungen gegenüberliegenden Seite des Ständers eine Abdeckung anbringbar, welche am oberen Endbereich mit einer Einhängevorrichtung ausgebildet ist, welche im Bolzen einhängbar ist, die am oberen Ende des Ständers in Löcher der Lochreihen einsetzbar und befestigbar sind. Dadurch lässt sich diese Abdeckung sehr einfach am Ständer anbringen, diese ist an beiden Seiten des Ständers einsetzbar, indem die Bolzen jeweils in die entsprechenden Löcher der Lochreihen befestigt werden.

In vorteilhafter Weise besteht die Abdeckung aus einem ferromagnetischen Blechelement, so dass dieses im unteren Bereich des Ständers durch in die entsprechenden Löcher der Lochreihen eingesetzten Magnete festgehalten werden kann, welche auf der entsprechenden Seite des Ständers angebracht werden können.

Eine Ausführungsform der Erfindung wird nachfolgend anhand der beiliegenden Zeichnung beispielhaft näher erläutert.

Es zeigt
Fig. 1 in räumlicher Darstellung die Anordnung von Flachbildschirmen eines Kommandopultes, wobei die Flachbildschirme zum Kommandopult bogenförmig angeordnet sind;
Fig. 2 in räumlicher Darstellung die Anordnung von Flachbi Idschirmen eines Kommandopultes, wobei die Flachbildschirme geneigt angeordnet sind;
Fig. 3 eine Darstellung im Schnitt einer Halterungsvorrichtung, befestigt im Ständer und mit aufgesetztem Flachbildschirm;
Fig. 4 eine Ansicht von oben auf die Halterungsvorrichtung gemäss Fig. 3, zum Teil im Schnitt;
Fig. 5 in räumlicher und separater Darstellung den ersten Halteteil und den zweiten Halteteil, welche die Halterungsvorrichtung bilden;
Fig. 6 in räumlicher Darstellung die Anordnung von zwei Halterungsvorrichtungen mit darauf aufgesetzten Flachbildschirmen am Ständer auf dessen geneigter Seite; und
Fig. 7 in räumlicher Darstellung die Anordnung von zwei Halterungsvorrichtungen mit darauf aufgesetzten Flachbildschirmen am Ständer auf dessen senkrechter Seite.

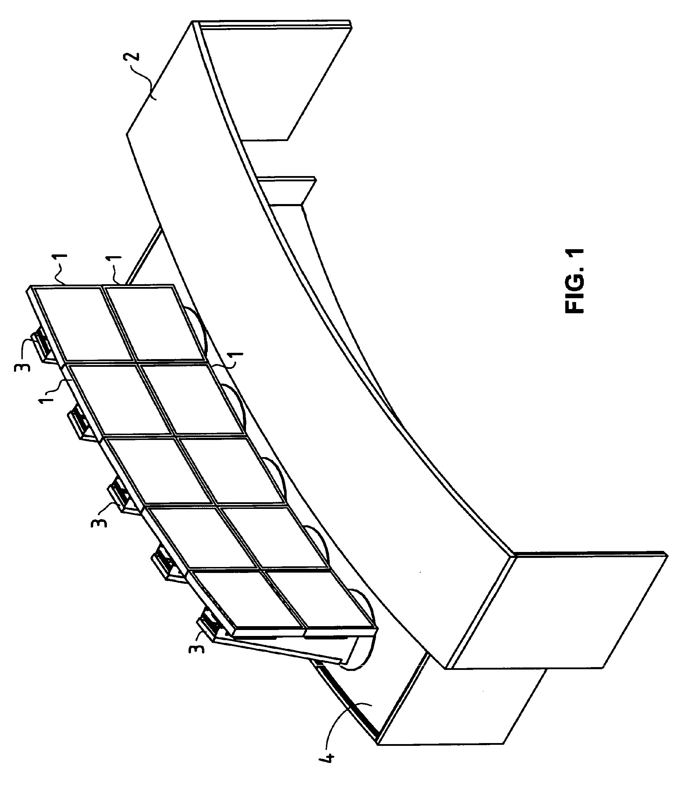

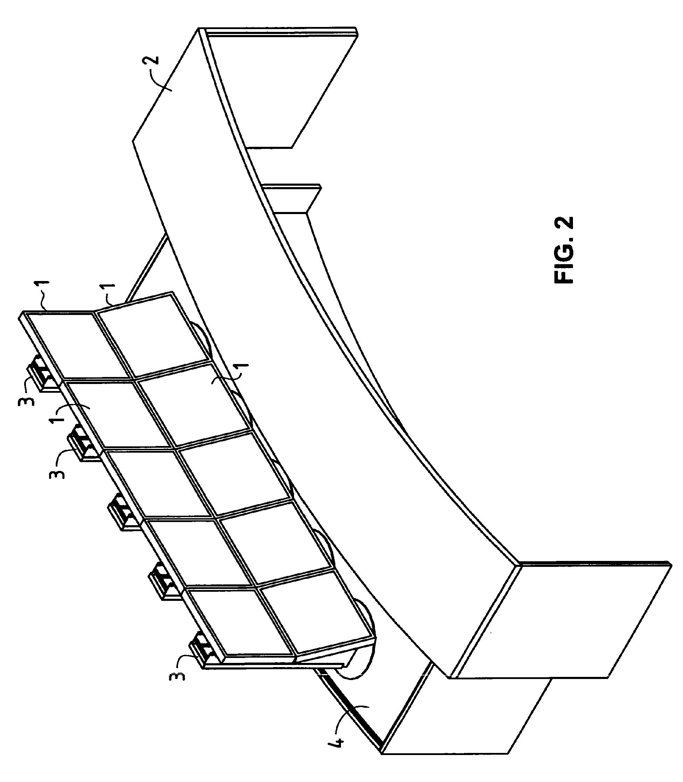

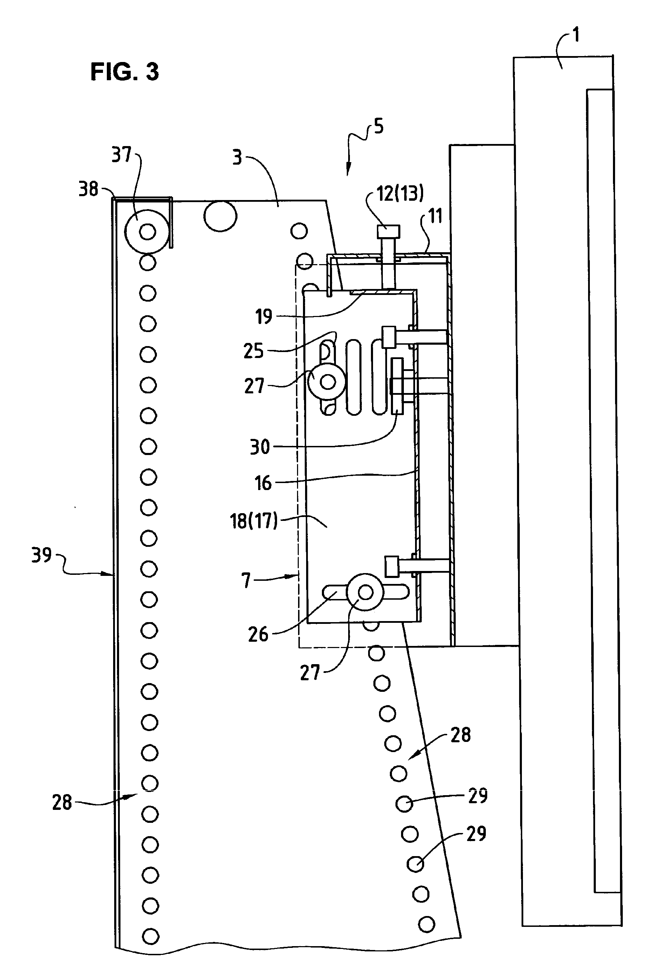

Wie aus Fig. 1 und 2 ersichtlich ist, sind mehrere Flachbildschirme 1 in Bezug auf ein Kommandopult 2 so angeordnet, dass sie eine im wesentlichen geschlossene Fläche bilden. Die Flachbildschirme 1 sind hierbei über Halterungsvorrichtungen (Fig. 3), die später noch im Detail beschrieben werden, an Ständern 3 befestigt. Im vorliegenden Ausführungsbeispiel sind pro Ständer 3 jeweils zwei übereinander angeordnete Flachbildschirme 1 vorgesehen. Die Ständer 3 werden dann nebeneinander auf einem vor dem Kommandopult 1 angeordneten Kasten 4 aufgestellt.

Die Flachbildschirme 1 weisen einen sehr schmalen Rand auf, zwischen den einzelnen Flachbildschirmen 1 sollte bei den vorgängig beschriebenen Anordnungen möglichst kein Spalt bestehen, die Flachbildschirme sollten auch gegenseitig genau ausgerichtet sein, damit diese nicht gegeneinander versetzt sind, was sich für den Betrachter als störend herausstellen würde. Dies kann durch die Halterungsvorrichtungen, wie hier später noch beschrieben wird, vermieden werden.

Wie aus Fig. 1 ersichtlich ist, sind bei dieser Anordnung die Flachbildschirme 1 in einer Vertikalfläche angeordnet, die gegen den Betrachter hin gebogen ist. In Fig. 2 sind die nebeneinander angeordneten Flachbildschirme gerade ausgerichtet, hinsichtlich der Vertikalrichtung sind sie geneigt. Diese Anordnungsmöglichkeiten werden später noch im Detail beschrieben.

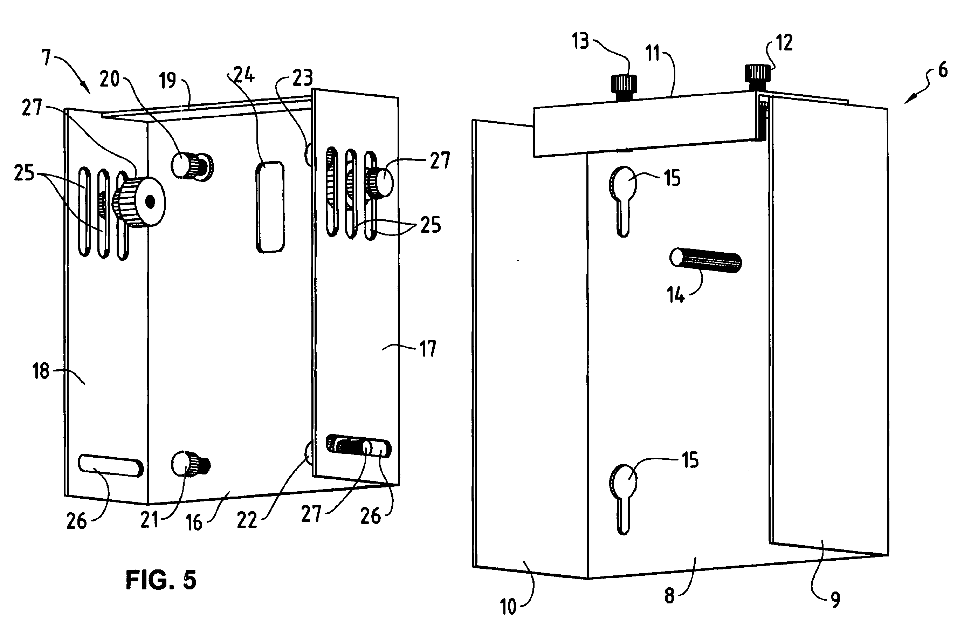

Die Halterungsvorrichtung 5, wie sie in den Fig. 3 bis 5 dargestellt ist, setzt sich, wie insbesondere aus Fig. 5 ersichtlich ist, aus einem ersten Halteteil 6 und einem zweiten Halteteil 7 zusammen. Der erste Halteteil 6 besteht aus einer Platte 8, die beispielsweise aus einem metallischen Blechteil gebildet ist. Diese Platte 8 ist mit seitlichen Abwinkelungen 9 und 10 versehen. Der obere Bereich der Platte 8 ist mit einer weiteren Abwinkelung 11 ausgestattet, welche mit zwei Gewindelöchern versehen ist, in welche zwei Schrauben 12 und 13 einschraubbar sind.

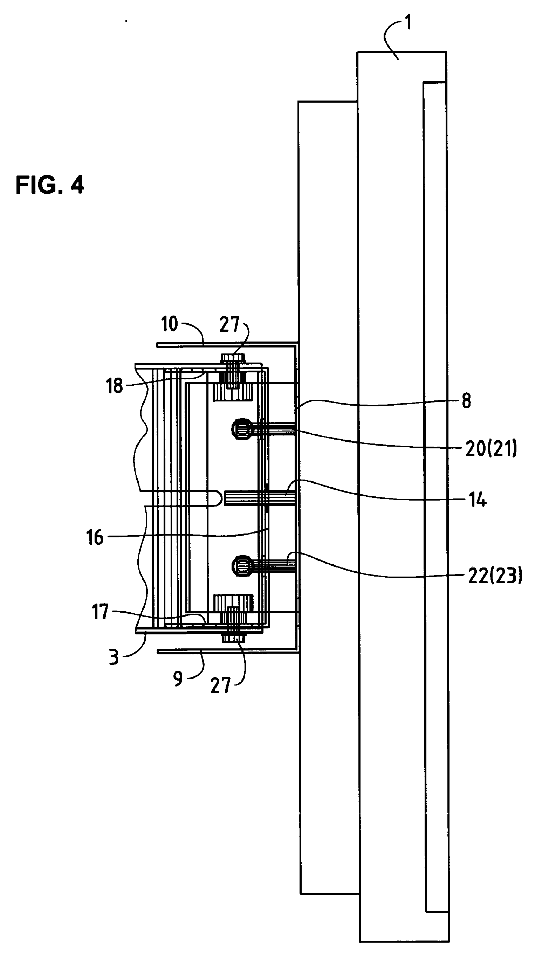

In einem mittleren Bereich der Platte 8 ist ein mit einem Gewinde versehener Schaft 14 befestigt, der senkrecht zur Platte 8 angeordnet ist. In der Platte 8 sind ferner Öffnungen 15 vorgesehen, mit welchen dieser erste Halteteil 6 in bekannter Weise am Flachbildschirm 1 (Fig. 3 und 4) befestigt werden kann.

Der zweite Halteteil 7 ist ebenfalls aus einer Platte 16 gebildet, die ebenfalls mit seitlichen Abwinkelungen 17 und 18 ausgestattet ist, welche zwei seitlich verlaufende Stege bilden. Auch diese Platte 16 besteht vorzugsweise aus einem metallischen Blechteil.

Der obere Randbereich dieser Platte 16 ist ebenfalls abgewinkelt und bildet eine Abstützfläche 19.

Die Platte 16 ist mit vier Gewindelöchern versehen, in welche jeweils eine Schraube 20, 21, 22 bzw. 23 einschraubbar ist. Im mittleren Bereich der Platte 16 ist eine schlitzförmige Öffnung 24 eingelassen, die eine Breite hat, die mindestens dem 1,5-fachen des Durchmessers des Schaftes 14 entspricht.

In den seitlichen verlaufenden Stegen 17 und 18 sind obere Ausnehmungen 25 und untere Ausnehmungen 26 angebracht. Die oberen Ausnehmungen 25 sind als längs verlaufende Schlitze ausgebildet, während die unteren Ausnehmungen 26 als quer verlaufende Schlitze ausgebildet sind. Im vorliegenden Ausführungsbeispiel sind pro Steg 17 bzw. 18 mehrere parallel verlaufende Längsschlitze angeordnet. In diese längs verlaufenden Schlitze 25 bzw. quer verlaufenden Schlitze 26 können Schrauben 27 eingesetzt werden, mit welchen dieser zweite Halteteil 7 am Ständer 3 (Fig. 3 und 4) befestigt werden kann.

Wie aus den Fig. 3 und 4 ersichtlich ist, wird der zweite Halteteil 7 über die Schrauben 27 mit dem Ständer 3 verbunden. Hierzu ist der Ständer 3 mit Lochreihen 28 versehen, deren Löcher 29 mit den längs verlaufenden Schlitzen 25 und den quer verlaufenden Schlitzen 26 korrespondieren. Durch die längs verlaufenden Schlitze 25 und die quer verlaufenden Schlitze 26 kann der zweite Halteteil 7 bezüglich des Ständers 3 in seiner Lage verstellt werden.

Auf den zweiten Halteteil 7 aufgesetzt wird der erste Halteteil 6. Hierbei ragt der Schaft 14 durch die schlitzförmige Öffnung 24, die in der Platte 16 des zweiten Halteteils angeordnet ist. Die Platte 8 des ersten Halteteils 6 stützt sich auf den Schrauben 20, 21, 22 und 23 ab, die in der Platte 16 des zweiten Halteteils eingeschraubt sind. Ferner stützt sich der erste Halteteil 6 über die Schrauben 12 und 13 auf der Abstützfläche 19 des zweiten Halteteils 7 ab.

Der erste Halteteil 6 lässt sich bezüglich des zweiten Halteteils 7 genau einjustieren, was bedeutet, dass der Flachbildschirm 1 bezüglich des Ständers 3 bzw. der benachbarten Flachbildschirme genau ausgerichtet werden kann. Durch Verstellen der Schrauben 12 und 13 kann die Seitenneigung des Flachbildschirms eingestellt werden. Durch Einstellen der Schrauben 20 bis 23 lässt sich einerseits der Abstand des ersten Halteteils 6 bezüglich des zweiten Halteteils 7 einstellen, zusätzlich lässt sich durch diese Schrauben 20 bis 23 jede Winkellage einstellen.

Wenn die Einstellung beendet ist, wird auf den Schaft 14, der durch die schlitzförmige Öffnung 24 der Platte 16 hindurchragt, eine Gewindemutter 30 aufgeschraubt. Mit dieser Gewindemutter 30 lässt sich der erste Halteteil 6 gegenüber dem zweiten Halteteil 7 verspannen, die vorgenommenen Einstellungen werden dadurch fixiert. Die Schrauben 27 und die Gewindemutter 30 können mit Kappen versehen sein, durch welche ein Anziehen bzw. Lösen dieser Schrauben von Hand erfolgen kann. Die Schrauben 12 und 13 bzw. 20 bis 23 könnten ebenfalls mit Kappen ausgestattet sein, in vorteilhafter Weise werden diese aber mit einem Schraubenschlüssel betätigt.

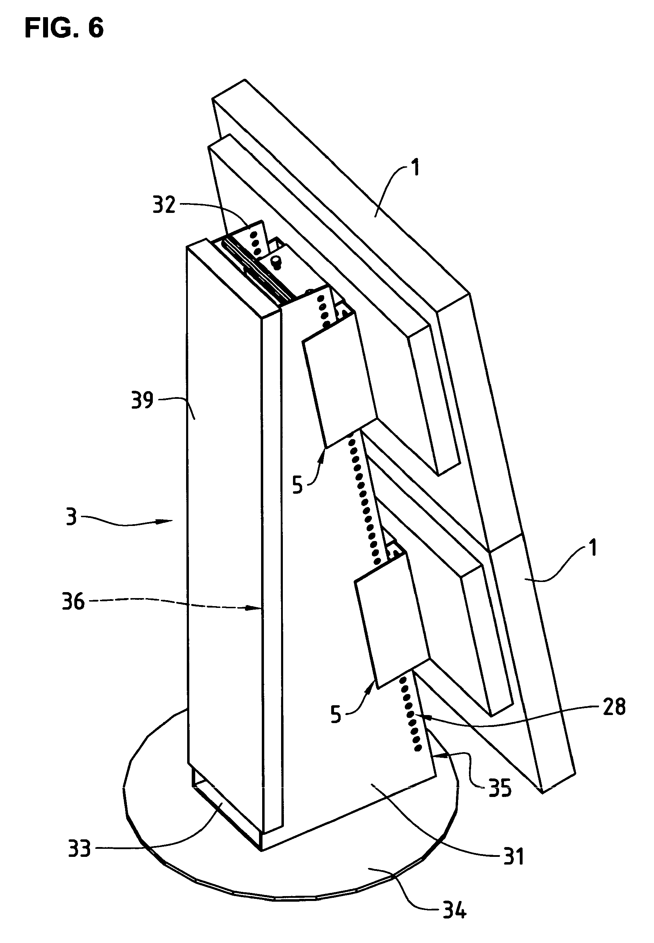

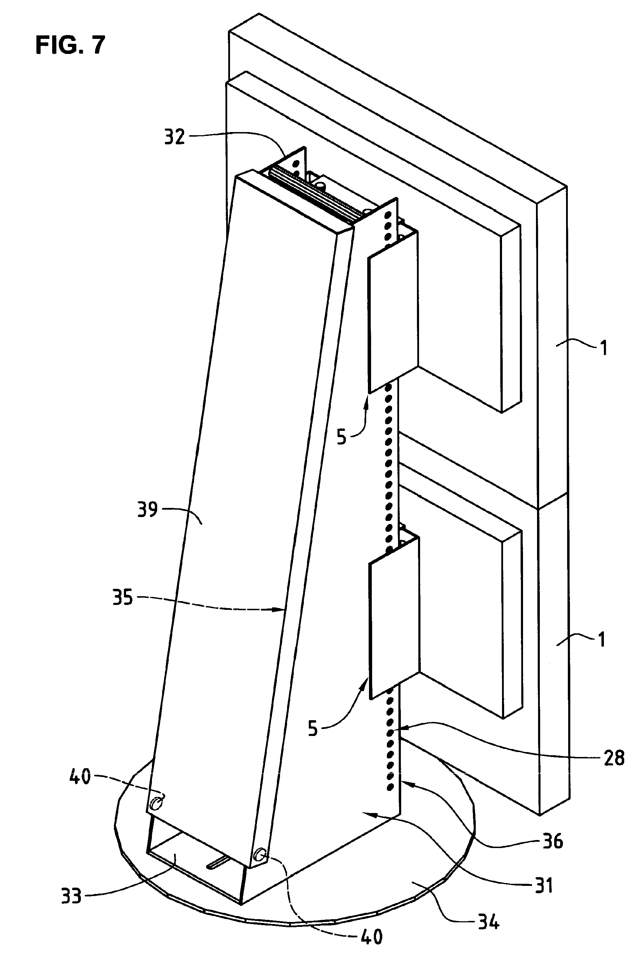

Wie aus den Fig. 6 und 7 ersichtlich ist, besteht der Ständer 3 für die Aufnahme von den vorgängig beschriebenen Halterungsvorrichtungen 5 aus zwei gleichen Platten 31 und 32, welche parallel zueinander und voneinander beabstandet miteinander fest verbunden sind. Zudem ist eine Grundplatte 33 vorgesehen, mit welchen die beiden Platten 31 und 32 im Grundbereich miteinander verbunden sind, und welche mit einem Fuss 34 versehen werden kann. Der eine längsseitige Rand 35 der Platten 31 und 32 ist bezüglich der Grundplatte 33 geneigt, während der andere längsseitige Rand 36 der Platten 31 und 32 bezüglich der Grundplatte 33 senkrecht verläuft. Entlang dieser längsseitigen Ränder 35 und 36 der Platten 31 und 32 sind Lochreihen 28 angebracht.

Im jeweils obersten Loch der Lochreihen 28, welche den im Ständer 3 angebrachten Flachbildschirme 1 gegenüberliegend sind, kann im obersten Loch jeweils ein Bolzen 37 eingeschraubt werden. In diese Bolzen 37, wie dies aus Fig. 3 ersichtlich ist, kann eine hakenförmig ausgebildete Einhängevorrichtung 38 einer Abdeckung 39 eingehängt werden, mit welcher Abdeckung 39 die offene Seite des Ständers 3, die den am Ständer 3 angebrachten Flachbildschirmen 1 gegenüberliegt, abgedeckt werden kann. Im untersten Loch der jeweiligen Lochreihe 28 können Magnete 40 (Fig. 7) eingeschraubt werden, welche den unteren Teil der Abdeckung 39, die aus einer ferromagnetischen Blechplatte gebildet ist, somit am Ständer festhalten.

Wie aus den Fig. 6 und 7 ersichtlich ist, können die Halterungsvorrichtung 5 am geneigten längsseitigen Rand 35 des Ständers 3 angebracht werden, wie dies in Fig. 6 dargestellt ist, sie können aber auch auf dem senkrechten längsseitigen Rand 36 des Ständers 3 angebracht werden, dargestellt in Fig. 7.

Wenn die Flachbildschirme am geneigten längsseitigen Rand des Ständers 3 befestigt sind, wie dies in Fig. 6 dargestellt ist, können die Flachbildschirme, wenn mehrere Ständer nebeneinander angeordnet sind, gerade ausgerichtet sein, wobei die oberen und unteren Flachbildschirme gegenseitig geneigt sein können, wie dies in Fig. 2 dargestellt ist. Wenn die Flachbildschirme 1 am senkrechten längsseitigen Rand 36 des Ständers 3 angeordnet sind, wie dies in Fig. 7 dargestellt ist, sind bei mehreren nebeneinander angeordneten Ständern 3 die Flachbildschirme senkrecht ausgerichtet, sie können aber bogenförmig um das Kommandopult aufgestellt werden, wie dies in Fig. 1 dargestellt ist.

Die Ständer 3 im vorgängig beschriebenen Ausführungsbeispiel sind ausgelegt für die Aufnahme von zwei Flachbildschirmen. Selbstverständlich können diese Ständer andere Längsabmessungen haben, wodurch mehr oder auch weniger als zwei Flachbildschirme mit den entsprechenden Halterungsvorrichtungen aufgenommen werden könnten.

Mit diesen Halterungsvorrichtungen für Flachbildschirme und den dazugehörenden Ständern wird ein sehr einfaches System erreicht, an welchem die Flachbildschirme befestigt werden können, wobei die Flachbildschirme in einfacher Weise und genau gegenseitig ausgerichtet werden können. Dieses System ist sehr einfach in der Handhabung und kostengünstig in der Herstellung. Es kann sehr flexibel eingesetzt werden.

## Patentansprüche

1. Ständer mit Halterungsvorrichtung für einen Flachbildschirm (1), welche Halterungsvorrichtung einen ersten Halteteil (6), der am Flachbildschirm (1) befestigbar ist, und einen zweiten Halteteil (7), der am Ständer (3) befestigbar ist, umfasst, wobei der erste Halteteil (6) und der zweite Halteteil (7) über Verbindungsmittel (14, 30) miteinander verbindbar sind, welche Verbindungsmittel (14, 30) so ausgestaltet sind, dass der erste Halteteil (6) bezüglich des zweiten Halteteils (7) einstellbar und ausrichtbar ist, und der erste Halteteil (6) und der zweite Halteteil (7) jeweils aus einer Platte (8, 16) gebildet sind, und an einer der Platten (8) mindestens drei bolzenartige Elemente (20, 21, 22) im wesentlichen senkrecht dazu angebracht sind und in achsialer Richtung bezüglich dieser Platte (8) einstellbar sind, auf welchen bolzenartigen Elementen (20, 21, 22) die andere Platte (16) abstützbar ist, und an der Platte (16) des zweiten Halteteils (7) eine im wesentlichen senkrecht dazu stehende Abstützfläche (19) angebracht ist, auf welcher zwei im wesentlichen parallel zueinander und zur Platte (8) des ersten Halteteils (6) ausgerichtete, an Aufnahmeelementen (11) der Platte (8) des ersten Halteteils (6) angebrachte weitere bolzenartige Elemente (12, 13) abstützbar sind, welche in achsialer Richtung einstellbar sind, **dadurch gekennzeichnet, dass** die Verbindungsmittel aus einem mit Gewinde versehenem Schaft (14), welcher an der Platte (8) des ersten Halteteils (6) befestigt ist und durch eine Öffnung (24) in der Platte (16) des zweiten Halteteils (7) hindurch ragt, und einer auf den Schaft (14) aufschraubbaren Gewindemutter (30) bestehen, mit welcher der erste Halteteil (6) gegen den zweiten Halteteil (7) spannbar ist.

2. Ständer mit Halterungsvorrichtung für einen Flachbildschirm nach Anspruch 1, **dadurch gekennzeichnet, dass** die Öffnung (24) in der Platte (16) des zweiten Halteteils (7) schlitzförmig ausgebildet ist und eine Breite hat, die mindestens dem 1,5fachen des Durchmessers des Schaftes (14) entspricht.

3. Ständer mit Halterungsvorrichtung for einen Flachbildschirm nach Anspruch 1 oder 2, **dadurch gekennzeichnet, dass** die bolzenartigen Elemente (20, 21, 22) aus Schrauben bestehen, welche in jeweilige Gewindelöcher einschraubbar sind, die an der Platte (16) des zweiten Halteteils (7) angebracht sind.

4. Ständer mit Halterungsvorrichtung für einen Flachbildschirm nach einem der Ansprüche 1 bis 3, **dadurch gekennzeichnet, dass** die weiteren bolzenartigen Elemente (12, 13) aus Schrauben bestehen, welche in jeweilige Gewindelöcher einschraubbar sind, die an den Aufnahmeelementen (11) der Platte (8) des ersten Halteteils (6) angebracht sind.

5. Ständer mit Halterungsvorrichtung nach einem der Ansprüche 1 bis 4, **dadurch gekennzeichnet, dass** der erste Halteteil (6) und der zweite Halteteil (7) aus jeweils einem metallischen Blechteil gebildet sind, und dass die Aufnahmeelemente (11) des ersten Halteteils (6) durch eine Abwinkelung des entsprechenden Blechteils und die Abstützfläche (19) des zweiten Halteteils (7) durch eine Abwinkelung des entsprechenden Blechteils gebildet sind.

6. Ständer mit Halterungsvorrichtung nach einem der Ansprüche 1 bis 5, **dadurch gekennzeichnet, dass** dieser aus zwei gleichen Platten (31, 32) gebildet ist, welche parallel zueinander und voneinander beabstandet miteinander fest verbunden sind und eine Grundplatte (33) aufweisen, dass der eine längsseitige Rand (35) der Platten (31, 32) bezüglich der Grundplatte (33) geneigt ist während der andere längsseitige Rand (36) der Platten (31, 32) bezüglich der Grundplatte (33) senkrecht verläuft, und dass entlang der längsseitigen Ränder (35, 36) der Platten (31, 32) Lochreihen (28) angebracht sind.

7. Ständer mit Halterungsvorrichtung nach Anspruch 6, **dadurch gekennzeichnet, dass** der zweite Halteteil (7) mit zwei jeweils seitlich verlaufenden Stegen (17, 18) ausgestattet ist, in welchen Ausnehmungen (25, 26) angebracht sind, so dass der zweite Halteteil (7) mit dem Ständer (3) über die Löcher (29) der Lochreihen (28) in wählbarer Höhe verschraubbar ist.

8. Ständer mit Halterungsvorrichtung nach Anspruch 7, **dadurch gekennzeichnet, dass** die oberen Ausnehmungen in den Stegen (17, 18) des zweiten Halteteils (7) als längsverlaufende Schlitze (25) ausgebildet sind und die unteren Ausnehmungen in den Stegen (17, 18) des zweiten Halteteils (7) als querverlaufende Schlitze (26) ausgebildet sind.

9. Ständer mit Halterungsvorrichtung nach einem der Ansprüche 6 bis 8, **dadurch gekennzeichnet, dass** an der den am Ständer (3) angebrachten Halterungsvorrichtungen (5) gegenüberliegenden Seite des Ständers (3) eine Abdeckung (39) anbringbar ist, welche am oberen Endbereich mit einer Einhängvorrichtung (38) ausgebildet ist, welche in Bolzen (37) einhängbar ist, die am oberen Ende des Ständers (3) in Löcher (29) der Lochreihen (28) einsetzbar und befestigbar sind.

10. Ständer mit Halterungsvorrichtung nach Anspruch 9, **dadurch gekennzeichnet, dass** die Abdeckung (39) aus einem ferromagnetischen Blechelement besteht, und dass im unteren Bereich des Ständers (3) in die entsprechenden Löcher (29) der Lochreihen (28) Magnete (40) einsetzbar und befestigbar sind, welche die Abdeckung (39) festhalten.

11. Ständer mit Halterungsvorrichtung nach Anspruch 10, **dadurch gekennzeichnet, dass** die Bolzen (37) und die Magnete (40) wahlweise auf der geneigten Seite oder auf der senkrechten Seite jeweils in den entsprechenden Löchern (29) der Lochreihen (28) anbringbar sind und die Abdeckung (39) auf beiden Seiten des Ständers (3) einsetzbar ist.

## Claims

1. Stand with fixture for a flat screen monitor (1), which fixture comprises a first mounting part (6), which is attachable to the flat screen monitor (1), and a second mounting part (7), which is attachable to the stand (3), the first mounting part (6) and the second mounting part (7) being connectible to each other via connecting means (14, 30), which connecting means (14, 30) are designed such that the first mounting part (6) is adjustable and alignable with respect to the second mounting part (7), and the first mounting part (6) and the second mounting part (7) are each formed by a plate (8, 16), and at least three bolt elements (20, 21, 22) are installed on one of the plates (8) substantially at a right angle thereto and are adjustable in axial direction with respect to this plate (8), on which bolt elements (20, 21, 22) the other plate (16) is supportable, and installed on the plate (16) of the second mounting part (7) is a support surface (19) situated substantially at a right angle thereto, on which two further bolt elements (12, 13), aligned substantially parallel to one another and to the plate (8) of the first mounting part (6), and installed on receiving elements (11) of the plate (8) of the first mounting part (6), are supportable, which are adjustable in axial direction, **characterised in that** the connecting means consist of a shaft (14), provided with a threading, which shaft is attached to the plate (8) of the first mounting part (6) and projects through an opening (24) in the plate (16) of the second mounting part (7), and a nut (30) screwable onto the shaft (14), with which nut the first mounting part (6) is able to be tensioned against the second mounting part (7).

2. Stand with fixture for a flat screen monitor according to claim 1, **characterised in that** the opening (24) in the plate (16) of the second mounting part (7) is designed slot-shaped, and has a width corresponding to at least 1.5 times the diameter of the shaft (14).

3. Stand with fixture for a flat screen monitor according to claim 1 or 2, **characterised in that** the bolt elements (20, 21, 22) consist of screws, which are screwable into respective threaded holes provided on the plate (16) of the second mounting part (7).

4. Stand with fixture for a flat screen monitor according to one of the claims 1 to 3, **characterised in that** the further bolt elements (12, 13) consist of screws which are screwable into respective threaded holes provided on the receiving elements (11) of the plate (8) of the first mounting part (6).

5. Stand with fixture according to one of the claims 1 to 4, **characterised in that** the first mounting part (6) and the second mounting part (7) are each made up of a metallic sheet metal part, and **in that** the receiving elements (11) of the first mounting part (6) are formed by a bending of the respective sheet metal part, and the support surface (19) of the second mounting part (7) by a bending of the respective sheet metal part.

6. Stand with fixture according to one of the claims 1 to 5, **characterised in that** this is formed by two equal plates (31, 32) which are firmly connected to each other in a way parallel to each other and spaced apart from each other, and have a base plate (33), **in that** the one lengthwise edge (35) of the plates (31, 32) is inclined with respect to the base plate (33) while the other lengthwise edge (36) of the plates (31, 32) runs at a right angle with respect to the base plate (33), and **in that** rows of holes (28) are provided along the lengthwise edges (35, 36) of the plates (31, 32).

7. Stand with fixture according to claim 6, **characterised in that** the second mounting part (7) is provided with two crosspieces (17, 18) each running laterally, in which recesses (25, 26) are made, so that the second mounting part (7) is screwable to the stand (3) at a selectable height via the holes (29) of the rows of holes (28).

8. Stand with fixture according to claim 7, **characterised in that** the upper recesses in the crosspieces (17, 18) of the second mounting part (7) are designed as longitudinally running slots (25), and the lower recesses in the crosspieces (17, 18) of the second mounting part (7) as transversely running slots (26).

9. Stand with fixture according to one of the claims 6 to 8, **characterised in that** installable on the side of the stand (3) opposite the fixtures (5) provided on the stand (3) is a cover (39), which is designed with a suspension device (38) on the upper end region, which suspension device is able to be hung on bolts (37), that are insertable and fixable in holes (29) of the rows of holes (28) at the upper end of the stand (3).

10. Stand with fixture according to claim 9, **characterised in that** the cover (39) consists of a ferromagnetic sheet metal element, and **in that** magnets (40) are insertable and fixable in the corresponding holes (29) of the rows of holes (28) in the lower region of the stand (3), which magnets firmly hold the cover (39).

11. Stand with fixture according to claim 10, **characterised in that** the bolts (37) and the magnets (40) are each installable in the corresponding holes (29) of the rows of holes (28), alternatively on the inclined side or on the perpendicular side, and the cover (39) is insertable on both sides of the stand (3).

## Revendications

1. Dispositif de fixation pour un écran plat (1), dispositif de fixation qui comprend une première partie de retenue (6) qui peut être fixée sur l'écran plat (1) et une seconde partie de retenue (7) qui est fixée sur le support (3), la première partie de retenue (6) et la second partie de retenue (7) étant reliables entre elles par des moyens de connexion (14, 30), moyens de connexion (14, 30) qui sont réalisés de sorte que la première partie de retenue (6) est réglable et ajustable par rapport à la seconde partie de retenue (7) et la première partie de retenue (6) et la seconde partie de retenue (7) étant formées respectivement à partir d'une plaque (8, 16) et sur une des plaques (8) au moins trois éléments en forme de boulon (20, 21, 22) sont aménagés essentiellement perpendiculairement et sont réglables dans la direction axiale par rapport à cette plaque (8), éléments en forme de boulon (20, 21, 22) sur lesquels vient s'appuyer l'autre plaque (16) et sur la plaque (16) de la seconde partie de retenue (7) est ménagée une surface d'appui (19) essentiellement perpendiculaire sur laquelle peuvent s'appuyer deux éléments en forme de boulon (12, 13) essentiellement parallèles entre eux et orientés par rapport à la plaque (8) de la première partie de retenue (6) et disposés sur des éléments de logement (11) de la plaque (8) de la première partie de retenue (6), éléments en forme de boulon qui sont réglables dans la direction axiale **caractérisé en ce que** les moyens de connexion se composent d'une tige (14) munie d'un filetage, tige qui est fixée sur la plaque (8) de la première partie de retenue (6) et qui s'engage par une ouverture (24) dans la plaque (16) de la seconde partie de retenue (7) et d'un écrou fileté (30) pouvant être vissé sur la tige (14), écrou sur lequel la première partie de retenue (+6) peut être serrée contre la seconde partie de retenue (7).

2. Support avec un dispositif de fixation pour un écran plat selon la revendication 1, **caractérisé en ce que** l'ouverture (24) est réalisée en forme de fente dans la plaque (16) de la seconde partie de retenue (7) et a une largeur qui correspond au moins à 1,5 fois le diamètre de la tige (14).

3. Support avec un dispositif de fixation pour un écran plat selon la revendication 1 ou 2, **caractérisé en ce que** les éléments en forme de boulon (20, 21, 22) se composent de vis qui sont vissables dans des trous filetés respectifs ménagés dans la plaque (16) de la seconde partie de retenue (7).

4. Support avec dispositif de fixation pour un écran plat selon l'une des revendications 1 à 3, **caractérisé en ce que** les autres éléments en forme de boulon (12, 13) se composent de vis qui sont vissables dans des trous filetés qui sont ménagés dans les éléments de logement (11) de la plaque (8) de la première partie de retenue (6).

5. Support avec dispositif de fixation selon l'une des revendications 1 à 4, **caractérisé en ce que** la première partie de retenue (6) et la seconde partie de retenue (7) sont formées d'une pièce en tôle métallique et **en ce que** les éléments de logement (11) de la première partie de retenue (6) sont formés par un coude de la pièce de tôle correspondante et la surface d'appuie (19) de la seconde pièce de retenue (7) est formée par un coude de la pièce de tôle correspondante.

6. Support avec dispositif de fixation selon l'une des revendications 1 à 5, **caractérisé en ce que** celui-ci est formé de deux plaques identiques (31, 32) qui sont reliées fixement entre elles et à distance les unes des autres et qui présentent une plaque de base(33), **en ce que** le bord longitudinal (35) des plaques (31, 32) est incliné par rapport à la plaque de base (33) tandis que l'autre bord longitudinal (36) des plaques (31, 32) s'étend perpendiculairement par rapport à la plaque de base (33) et **en ce que** des séries de trous (28) sont ménagées le long des bords longitudinaux (35, 36) des plaques (31, 32).

7. Support avec dispositif de fixation selon la revendication 6, **caractérisé en ce que** la seconde partie de retenue (7) est munie de deux arcades s'étendant parallèlement sur le côté (17, 18), arcades dans lesquelles sont ménagés des évidements (25 ; 26), de sorte que la seconde partie de retenue (7) est vissable à hauteur réglable avec le support (3) par les trous (29) des séries de trous (28).

8. Support avec dispositif de fixation selon la revendication 7, **caractérisé en ce que** les évidements supérieurs sont réalisés dans les arcades (17, 18) de la seconde partie de retenue (7) comme des fentes longitudinales (25) et **en ce que** les évidements inférieurs sont réalisés dans les arcades (17, 18) de la second partie de retenue (7) sous forme de fentes transversales (26).

9. Support avec dispositif de fixation selon l'une des revendications 6 à 8, **caractérisé en ce que** sur la face du support (3) opposée aux dispositifs de fixation (5) placés sur le support (3), il peut être disposé un couvercle (39) qui est réalisé sur la zone supérieure d'extrémité par un dispositif d'accrochage (38) qui peut être accroché dans des boulons (37) qui sont insérables et fixables sur l'extrémité supérieure du support (3) dans des trous (29) des séries de trou (28).

10. Support avec dispositif de fixation selon la revendication 9, **caractérisé en ce que** le couvercle (39) se compose d'un élément en tôle ferromagnétique et **en ce que** dans la zone inférieure du support (3), des aimants (40) sont insérables et fixables dans les trous correspondants (29) des séries de trous (28), aimants qui retiennent le couvercle (39).

11. Support avec dispositif de fixation selon la revendication 10, **caractérisé en ce que** les boulons (37) et les aimants (40) peuvent être placée au choix sur la face inclinée ou sur la face perpendiculaire respectivement dans les trous correspondants (29) des séries de trous (28) et **en ce que** le couvercle (39) peut être placé des deux côtés du support (3).
